# EUROPEAN PATENT SPECIFICATION

(11) **EP 2 256 066 B1**
(45) Date of publication and mention of the grant of the patent: **01.02.2012**
(21) Application number: 10163745.2
(22) Date of filing: 25.05.2010
(51) Int. Cl.: B65D 90/18, B65G 7/04

(54) **Method for attaching a transport wheel arrangement to a container and a transport wheel arrangment of a container**
Verfahren zur Befestigung einer Transportradanordnung an einem Container und Transportradanordnung eines Containers
Procédé pour fixer un agencement de roue de transport sur un conteneur et agencement de roue de transport d'un conteneur

(30) Priority: 28.05.2009 FI 20095590
(43) Date of publication of application: 01.12.2010
(73) Proprietor: Yski, Pasi, 32700 Huittinen (FI)
(72) Inventor: Yski, Pasi, 32700 Huittinen (FI)
(74) Representative: Suominen, Kaisa Liisa

(56) References cited:
- EP-A2- 0 009 921
- FR-A1- 2 630 410
- GB-A- 140 555
- GB-A- 191 021 920
- US-A- 4 940 252
- US-B1- 6 179 522

## Description

The invention relates to a method, according to the preamble of claim 1, for attaching a separate transport wheel arrangement to a container. The invention also relates to a transport wheel arrangement of a container, according to the preamble of claim 3, which transport wheel arrangement has a frame, at least one wheel and attaching means for attaching to the container.

Containers, inside which the goods to be transported are packed, are generally used for sea and road transportation of goods. The most common container type is a so-called ISO container defined and classified by the international standardization organization (ISO). Container cranes moving on rails, straddle carriers and telescopic lifts moving on wheels are used for loading the containers onto transportation means and for unloading them from the transportation means. Such transport devices for containers are however large and expensive, so they are used only in the largest harbours and cargo terminals. Containers often have to be moved also in low and narrow storage buildings, where the use of cranes and large telescopic lifts is not possible.

Publications US 3570694 and US 4297068 present separate wheel units for moving a container. The wheel units are attached to the ends of the container, whereby they remarkably increase the total length of the container/wheel unit combination.

Publication US 5356257 presents a separate carriage for lifting and moving a container. The carriage has an elongated frame, which is attached to openings in the bottom edge of the end frame of the container. There are wheels in both ends inside the frame, which wheels can be lowered, whereby the container can be moved in a transverse direction of the container along the ground. The carriage can be equipped with second wheels for moving the container in a longitudinal direction.

Publication GB 2229165 presents a transportation container, in the bottom surface of which there is a hydraulic protruding wheel arrangement. When the transportation container is not moved on the wheels, the wheel arrangement can be pulled into the container, whereby the bottom surface of the container settles against the ground. In this solution the wheel arrangement is an integral part of the container structure, so the same wheel arrangement cannot be used for moving other containers. A wheel arrangement, which is pulled into the container, decreases the interior of the container.

Publication DE 1926978 also presents a wheel arrangement for a container, which wheel arrangement is attached to the side of the container.

Publication EP 0009921 presents, according to the preamble of claim 1, a wheel means arranged to be mounted with a corner aperture of a container in order to allow the container to be moved. The wheel means comprises a base plate having a ground engaging means, such as a wheel or a roller assembly coupled to the underside, and a locating and locking device attached to the upper side thereof.

The object of the invention is to provide a new method for moving containers and a transport wheel arrangement of a container, with which disadvantages and flaws relating to the prior art can be significantly reduced.

The objects of the invention are obtained with a method and a transport wheel arrangement, which are characterized in what is presented in the independent claims. Some advantageous embodiments of the invention are presented in the dependent claims.

The method according to the invention relates to the attaching of a separate transport wheel arrangement to a container, preferably to a transportation container according to the ISO standard. Containers equipped with transport wheel arrangements can be moved by pulling or pushing along the ground, such as a yard of a cargo terminal, a loading dock or a floor of a storage shed. The basic idea of the invention is that the transport wheel arrangement is attached to the bottom side of the container, i.e. to the side of the container, which is against the ground. The transport wheel arrangement is thus situated essentially inside the area delimited by the edges of the side, which is against the ground, whereby the transport wheel arrangement increases the total length of the container/transport wheel arrangement combination by as little as possible. Further in the method, the transport wheel arrangement is attached to the container to rotate around a rotation axis, whereby the wheel arrangement is turnable in a desired transport direction. Due to the turning property of the wheel arrangement, the transport direction of the container can be chosen freely, based on the demands of the operating environment.

In the method according to the invention, the transport wheel arrangement is attached to a slot in the corner of the container, which slot is formed for a locking element which has a locking axis, which can be rotated around a longitudinal axis and moved in the direction of the longitudinal axis, in one end of which locking axis there is an end piece, which is fitted into the slot in the corner of the container. It is known that for example so-called ISO containers have readymade standard length slots in the corners on all sides, which slots are meant to make possible attaching to the container with various locking elements. These slots are utilized in the invention in attaching the transport wheel arrangements.

The transport wheel arrangement of a container according to the invention has a frame, at least one wheel and attaching means for attaching to the container. The basic idea of the transport wheel arrangement is that the attaching means comprise a locking member, which makes possible the attaching of the transport wheel arrangement to the bottom side of the container, i.e. to the side of the container, which is against the ground. The attaching means are also arranged to rotate around the rotation axis.

In the transport wheel arrangement according to the invention the rotation is arranged so that the locking member has a locking axis, which is rotatable around the longitudinal axis and moveable in the direction of the longitudinal axis, in one end of which locking axis there is an end piece, which can be fitted into the slot in the corner of the container, which slot is manufactured for attaching the locking member.

In a second advantageous embodiment of the transport wheel arrangement according to the invention there is a support part, which has a through-hole for the locking axis. The frame of the transport wheel arrangement has a bottom and a hollow space, into which hollow space the support part is placed to rotate in relation to the frame. The attachment between the support part and the frame makes possible the turning of the wheels of the transport wheel arrangement in a desired travel direction, even if the support part itself is attached to the container in a non-rotatable manner.

In a third advantageous embodiment of the transport wheel arrangement according to the invention there is a thrust bearing around the locking axis, between the support part and the bottom. Preferably there is a thrust bearing also around the locking axis, between the support part and the end piece.

According to an embodiment of the invention the transport wheel arrangement has one wheel, which is placed in an eccentric manner in relation to the frame and there is at least one ring bearing around the support part, between the inner surface of the frame and the outer surface of the support part. Preferably said ring bearing is an oil film thrust bearing, which has the length of the support part. Such a solution is especially suitable when the transport wheel arrangement is used in a conveyor line or in connection with loading/turning cranes.

It is an advantage of the invention that it makes possible the moving of containers also in narrow and low spaces.

It is further an advantage of the invention that it makes possible the moving of containers without expensive cranes or forklifts.

It is an advantage of the transport wheel arrangement according to the invention that it is attachable to the bottom surface of the container, at least mainly within the outline delimited by the outer dimensions of the container, whereby it does not remarkably increase the total length of the container/wheel arrangement combination. This makes the moving of the container easier in narrow spaces.

It is a further advantage of the transport wheel arrangement according to the invention that its structure is simple and its manufacturing costs are inexpensive.

In the following, the invention will be described in detail. In the description, reference is made to the appended drawings, in which
Figure 1 a shows as an example a transport wheel arrangement according to the invention seen from the side,
Figure 1b shows the transport wheel arrangement of Figure 1 a seen from the end,
Figure 1c shows the transport wheel arrangement of Figures 1 a and 1 b seen from above,
Figure 2 shows as an example the corner part of a container, whereto a transport wheel arrangement according to the invention has been attached,
Figure 3 shows as an example an advantageous embodiment of the transport wheel arrangement according to the invention and
Figure 4 shows as an example a second advantageous embodiment of the transport wheel arrangement according to the invention as a cross-section.

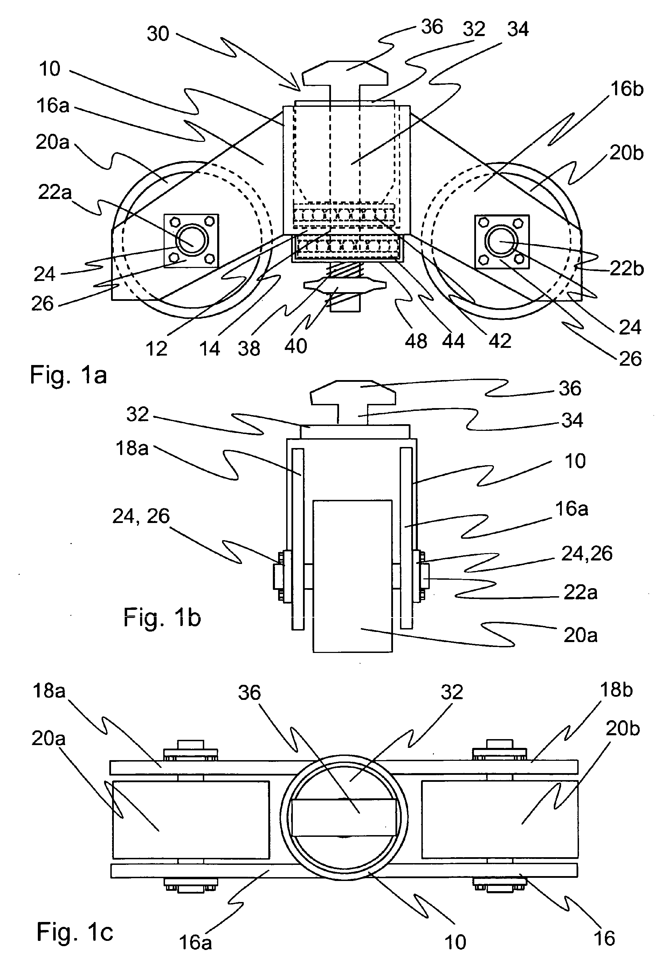

Figure 1 a, 1b and 1c shows as an example a transport wheel arrangement for a container according to the invention as seen from three different directions. The transport wheel arrangement has a hollow frame 10, which has a cylindrical shape. In the first end of the frame there is a bottom 12, in the middle of which there is a hole 14. The second end of the frame is open. On the first side of the frame there are two plate-like first lugs 16a, 16b, and on the second side of the frame two second lugs 18a, 18b. The first lugs are attached at their one end to the frame, so that they settle essentially in a parallel position on the first side of the frame, whereby their free ends point in opposite directions. Correspondingly the second lugs are attached essentially in a parallel manner with the first lugs on the second side of the frame, so that the free ends of the lugs point in opposite directions. The lugs thus form two wheel support slots on opposite sides of the frame. The frame, the bottom and the lugs are parts manufactured from metal, preferably steel, which have been connected to each other with weld attaching.

Between the first lug 16a, 16b and the second lug 18a, 18b there is a wheel 20a, 20b, through which an axis 22a, 22b passes. The wheels have a metallic center, which is surrounded by a flexible rubber layer. The first end of the axis passes through a hole in the first lug and the second end of the axis passes through a hole in the second lug. Bearing housings 26 with holes, in which bearing housings there is a bearing 24, are attached with bolt attaching to the outer surface of the lugs, where the axis passes through. The ends of the axes pass through the center hole of the bearing. The type of the bearing 24 can be a roller bearing or a slide bearing. Due to the bolt attachment, the bearing housing can if necessary be detached for the purpose of service or changing of the bearing.

Figures 1 a and 1 b show the transport wheel arrangement in a position, where it is in a normal use situation when moving it on the ground. In the use situation the wheels 20a, 20b settle against the surface of the ground and the longitudinal axis of the cylindrical frame is essentially perpendicular to the surface of the ground. The expressions describing directions, such as up/down or above/below, which are used in the following description, mean the directions when the transport wheel arrangement is in the position according to Figures 1 a and 1 b. If the transport wheel arrangement is in another position, the expressions describing directions change accordingly.

In connection with the frame 10 there is a locking member 30 for locking onto the container. The locking member comprises a cylindrical support part 32 fitted into the frame, in the middle of which support part there is a longitudinal through-hole for a locking axis 34. In the first end of the locking member there is an elongated end piece 36, which is in a transverse position in relation to the longitudinal direction of the locking axis. The length of the end piece is dimensioned so that it fits through the elongated slots in the corners of the containers, when the end piece is essentially parallel to the slot in the container. When the end piece is turned in a position, which deviates from the longitudinal direction of the slot, it cannot fit to pass through the slot. In the corner pieces of commonly used transportation containers, such as ISO containers, there are slots for attaching locking members, the dimensions and shapes of which slots are defined in the ISO standard. The end piece of the locking member according to the invention is dimensioned so that it can be attached to the locking slot of a corner piece of a standard ISO container. In the second end of the locking axis there are threads 38 and a tightening piece 40, which is fitted around the locking axis and moves on the threads.

The support part 32 of the locking member is installed in the frame 10 so that its upward pointing first end settles slightly above the level of the edge of the frame. The end piece 36 in the first end of the locking axis 34 thereby extends clearly above the level of the edge of the frame. The second end of the locking axis is fitted into a hole 14 in the bottom 12 and it extends through the bottom. The tightening piece 40 around the locking axis is situated below the bottom. Around the locking axis, between the support part 32 and the bottom 10, there is a first thrust bearing 42, and between the bottom and the tightening piece there is a second thrust bearing 44. The thrust bearings make possible the rotation of the support part 32 and the locking axis around its longitudinal axis as the frame 10 stays in its place. There is a protection cover 48 around the second thrust bearing.

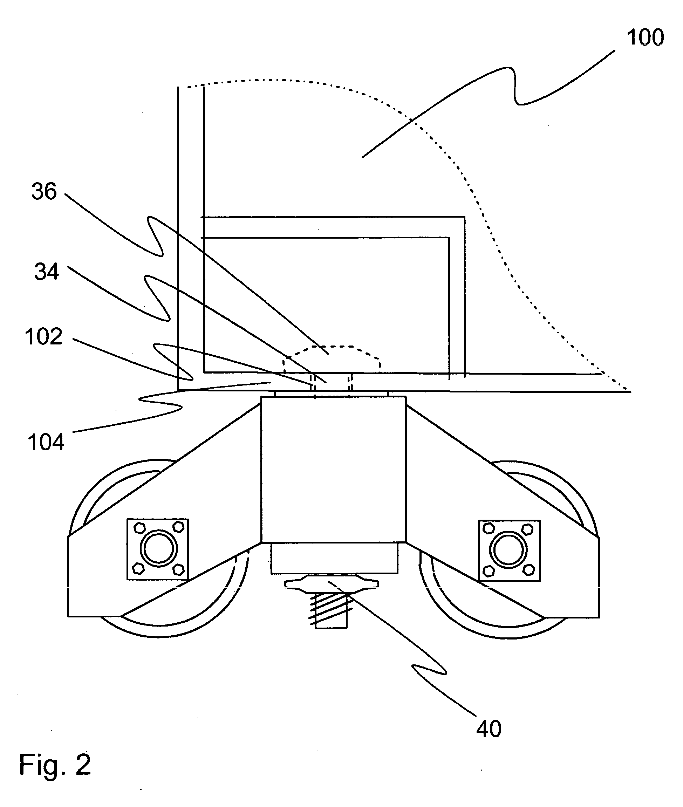

Figure 2 shows as an example the transport wheel arrangement according to the invention as attached to the corner of a container 100. Only the corner piece of the container, which is essential with regards to the attaching, is shown in the figure. The transport wheel arrangement according to the invention is attached in its place in the following manner: The transport wheel arrangement is moved under the corner of the container, so that the first end of the locking axis 34 points towards the slot 102 in the corner piece of the container. The locking axis is now rotated into such a position that the longitudinal axis of the end piece is essentially parallel with the longitudinal direction of the slot in the corner piece, whereafter the locking shaft is pushed through the slot 102 into the corner piece. The locking shaft, which was pushed in, is subsequently rotated about 90 degrees into a position, where the end piece cannot pass through the slot. Thereafter the tightening piece is rotated in the tightening direction, whereby the tightening piece moves towards the first end of the locking axis. The tightening piece is rotated so long that the wall plate 104 of the container, which surrounds the slot 102 in the corner piece of the container, is pressed between the end piece 36 of the locking shaft and the first end of the support part, whereby the locking part is attached to the corner part of the container. At the same time the bottom of the frame is pressed between the support part and the tightening piece 40, which locks the locking member to the frame 10. The thrust bearings (Figure 1 a) on both sides of the bottom however make possible the rotation of the frame around the locking axis, when the transport wheel arrangement is attached to the container.

A transport wheel arrangement is installed in each corner of the container in the manner described above, whereafter the container can be moved on the transport wheel arrangements along the ground, such as the yard of the cargo terminal, the loading dock or the floor of the storage building. The transport direction of the container can be chosen freely by turning the frame of the transport wheel arrangement so that the wheels point in the desired transfer direction. The transport wheel arrangements in the same end of the container can be connected with a connecting bar, so that both transport wheel arrangements always point in the same direction. A pulling shaft for connecting the container to a pulling device, such as a vehicle or a work machine, can be attached to the connecting bar (the pulling shaft and the connecting bar are not shown in the figures).

In order to attach the transport wheel arrangement, the container 100 has to be lifted off the ground, so that the transport wheel arrangements can be installed on the side of the container, which side is against the ground. The lifting of the container can be done with a separate lifting device, such as a jack. The transport wheel arrangements can be installed in their place also at the time when the container is lifted off a transport means, whereby the underside of the container is in any case in a position detached from the ground.

When the container has been moved to a desired location, the transport wheel arrangements can be detached. The detaching stage is a reversed procedure in comparison to the attaching, i.e. it consists of loosening the tightening piece and turning the locking axis into a position, where the end piece can fit to pass through the slot 102.

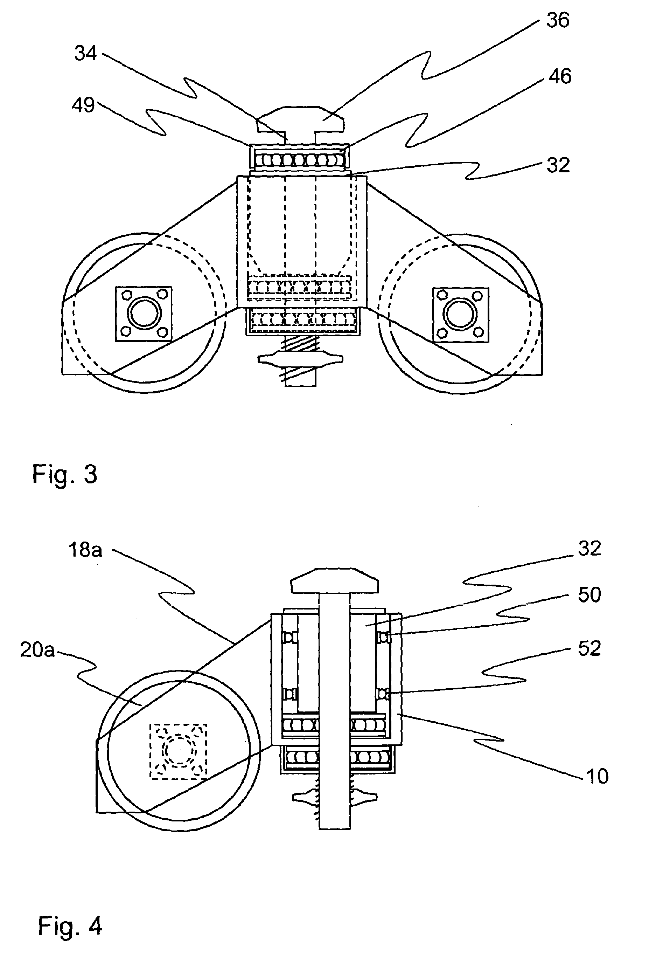

Figure 3 shows an advantageous embodiment of a transport wheel arrangement according to the invention as seen from the side. The embodiment of Figure 3 differs from the transport wheel arrangement shown in Figures 1a, 1b and 1c in that it further comprises a third thrust bearing 46, which is placed around the locking axis 34 between the end piece 36 and the first end surface of the support part 32. There is a protection cover 49 on the third thrust bearing. When installing the transport piece in its place, the third thrust bearing settles against the bottom side of the container by means of the protection cover. The third thrust bearing further improves the turning possibilities of the transport wheel arrangement and even makes it possible to remove the first thrust bearing between the support part and the bottom plate.

Figure 4 shows another advantageous embodiment of the transport wheel arrangement according to the invention as a cross-section. The embodiment on Figure 4 has same structural parts as the previously described embodiments. The same names and the same reference numbers have been used for these parts in the description. The advantageous embodiment of the invention shown in Figure 4 has only one wheel 20a. The wheel is attached to the slot between the first and second lug 18a on one side of the frame 10. Because the wheel is placed in an eccentric manner in relation to the locking axis 34, the frame 10 strives to tilt in relation to the support part 32. In order for the tilting of the frame not to prevent the rotation of the frame, an upper and a lower ring-like ring bearing 50, 52 has been installed around the support part 32. The ring bearings are at their outer edge supported on the inner surface of the cylindrical frame 10 and at their inner edge on the outer surface of the support part 32, i.e. they form a support surface between the frame and the support part, which support surface makes possible the rotation of the frame. A particular advantage of this advantageous embodiment of the invention is that the transport wheel arrangements attached to the bottom side of The container now in their entirety remain inside the area delimited by the bottom side, whereby the containers can be moved against other containers or walls of the storage space without spacing in between.

The transport wheel arrangement according to the invention is especially well suited for use in situations, where a container needs to be moved in low spaces. Such spaces are among others storage buildings, where especially the height of the door openings sets limitations to the used transport equipment. It is therefore appropriate to build the transport wheel arrangement according to the invention so that the total height of the installed transport wheel arrangement measured from the surface of the ground to the lower surface of the container is as small as possible. Preferably the total height of the transport wheel arrangement is 25-30 centimeters. The length of the transport wheel arrangement, i.e. the longest distance between the free ends of the lugs, can be selected to be suitable according to the circumstances in the use location. Preferably the length of a two-wheeled transport wheel arrangement is about 60 centimeters.

Some advantageous embodiments of the method and transport wheel arrangement according to the invention have been described above. The invention is not limited to the solutions described above, but the inventive idea can be applied in numerous ways within the scope of the claims.

## Claims

1. A method for attaching a separate transport wheel arrangement according to claim 3 to a container (100) comprising a corner piece having a slot (102) and a wall plate (104) surrounding the slot (102), in which method the transport wheel arrangement is attached to the side of the container, which is against the ground, whereby the transport wheel arrangement is situated essentially inside the area delimited by the edges of the side, which is against the ground, and the transport wheel arrangement is attached to the container to rotate around a rotating axis, whereby the wheel arrangement is turnable in a desired transport direction, wherein the transport wheel arrangement is attached to a slot (102) in the corner of the container, which slot is formed for the locking member (30) wich has a locking axis (34), which can be rotated around a longitudinal axis and in one end of the locking axis there is an end piece (36), which is fitted into the slot (102) in the corner of the container, **characterized in that** the locking member (30) can be further moved in the direction of the longitudinal axis, such that the wall plate (104) of the container, is pressed between the end piece (36) of the locking shaft (34) and the frame (10).

2. The method according to claim 1, **characterized in that** one transport wheel arrangement is attached in each corner of the side, which is against the ground.

3. Transport wheel arrangement of a container comprising a corner piece having a slot (102) and a wall plate (104) surrounding the slot (102) which wheel arrangement has a frame (10), at least one wheel (20a) and attaching means for attaching to the container (100), the attaching means being arranged to rotate around a rotating axis, which said attaching means comprise a locking member (30) for attaching to the side of the container, which is against the ground, wherein the locking member (30) has a locking axis (34) which can be rotated around a longitudinal axis and in one end of the locking axis there is an end piece (36), which can be fitted into a slot (102) in the corner of the container, **characterized in that** the locking member (30) can be further moved in the direction of the longitudinal axis, such that the wall plate (104) of the container, is pressed between the end piece (36) of the locking shaft (34) and the frame (10).

4. The transport wheel arrangement according to claim 3, **characterized in that** it further comprises a support part (32), which has a through-hole for the locking axis (34) and a bottom (12) and hollow space in the frame (10), in which hollow space the support part is placed to rotate in relation to the frame.

5. The transport wheel arrangement according to claim 4, **characterized in that** there is a thrust bearing (42) around the locking axis (34), between the support part (32) and the bottom (12).

6. The transport wheel arrangement according to claim 4 or 5, **characterized in that** there is a thrust bearing (46) around the locking axis (34), between the support part (32) and the end piece (36).

7. The transport wheel arrangement according to any of the claims 3-6, **characterized in that** it has two wheels (20a, 20b), which are placed on opposite sides of the frame (10).

8. The transport wheel arrangement according to any of claims 4-6, **characterized in that** it has one wheel (20a), which is placed in an eccentric manner in relation to the frame (10), and there is at least one ring bearing (50, 52) around the support part (32), between the inner surface of the frame and the outer surface of the support part.

9. The transport wheel arrangement according to claim 8, **characterized in that** said ring bearing (50, 52) is an oil film thrust bearing, which has the length of the support part.

## Patentansprüche

1. Verfahren zum Befestigen einer separaten Transportradanordnung gemäß Anspruch 3 an einem Container (100), der ein Eckstück aufweist, das einen Schlitz (102) und eine den Schlitz (102) umgebende Wandplatte (104) hat, wobei bei dem Verfahren die Transportradanordnung an der Seite des Containers befestigt wird, die dem Boden zugewandt ist, wodurch sich die Transportradanordnung im Wesentlichen im Innern des Bereichs befindet, der von den Kanten der Seite begrenzt wird, die dem Boden zugewandt ist, und die Transportradanordnung an dem Container so befestigt wird, dass sie sich um eine Rotationsachse dreht, wodurch die Radanordnung in einer gewünschten Transportrichtung drehbar ist, wobei die Transportradanordnung an einem Schlitz (102) in der Ecke des Containers befestigt wird, wobei der Schlitz für das Arretierungselement (30) gebildet ist, das eine Arretierungsachse (34) hat, die um eine Längsachse gedreht werden kann, und sich an einem Ende der Arretierungsachse ein Endstück (36) befindet, das in den Schlitz (102) in der Ecke des Containers gepasst ist, **dadurch gekennzeichnet, dass** das Arretierungselement (30) des Weiteren in der Richtung der Längsachse derart bewegt werden kann, dass die Wandplatte (104) des Containers zwischen das Endstück (36) der Arretierungswelle (34) und den Rahmen (10) gepresst wird.

2. Verfahren nach Anspruch 1, **dadurch gekennzeichnet, dass** eine Transportradanordnung in jeder Ecke der Seite, die dem Boden zugewandt ist, befestigt wird.

3. Transportradanordnung eines Containers, der ein Eckstück aufweist, das einen Schlitz (102) und eine den Schlitz (102) umgebende Wandplatte (104) hat, wobei die Radanordnung einen Rahmen (10), wenigstens ein Rad (20a) und Befestigungseinrichtungen für das Befestigen an dem Container (100) hat, wobei die Befestigungseinrichtungen so angeordnet sind, dass sie sich um eine Rotationsachse drehen, wobei die Befestigungseinrichtungen ein Arretierungselement (30) zum Befestigen an der Seite des Containers, die dem Boden zugewandt ist, aufweisen, wobei das Arretierungselement (30) eine Arretierungsachse (34) hat, die um eine Längsachse gedreht werden kann, und sich an einem Ende der Arretierungsachse ein Endstück (36) befindet, das in einen Schlitz (102) in der Ecke des Containers eingepasst werden kann, **dadurch gekennzeichnet, dass** das Arretierungselement (30) des Weiteren in der Richtung der Längsachse derart bewegt werden kann, dass die Wandplatte (104) des Containers zwischen das Endstück (36) der Arretierungswelle (34) und den Rahmen (10) gepresst wird.

4. Transportradanordnung nach Anspruch 3, **dadurch gekennzeichnet, dass** sie des Weiteren ein Stützteil (32) aufweist, das eine Durchgangsbohrung für die Arretierungsachse (34) und einen Boden (12) und einen Hohlraum in dem Rahmen (10) hat, wobei in dem Hohlraum das Stützteil so platziert ist, dass es sich in Bezug auf den Rahmen dreht.

5. Transportradanordnung nach Anspruch 4, **dadurch gekennzeichnet, dass** sich ein Axiallager (42) um die Arretierungsachse (34) herum zwischen dem Stützteil (32) und dem Boden (12) befindet.

6. Transportradanordnung nach Anspruch 4 oder 5, **dadurch gekennzeichnet, dass** sich ein Axiallager (46) um die Arretierungsachse (34) herum zwischen dem Stützteil (32) und dem Endstück (36) befindet.

7. Transportradanordnung nach einem der Ansprüche 3 bis 6, **dadurch gekennzeichnet, dass** sie zwei Räder (20a, 20b) hat, die auf gegenüberliegenden Seiten des Rahmens (10) platziert sind.

8. Transportradanordnung nach einem der Ansprüche 4 bis 6, **dadurch gekennzeichnet, dass** sie ein Rad (20a) hat, das auf eine exzentrische Art und Weise relativ zu dem Rahmen (10) platziert ist, und wenigstens ein Ringlager (50, 52) um das Stützteil (32) herum zwischen der Innenfläche des Rahmens und der Außenfläche des Stützteils vorhanden ist.

9. Transportradanordnung nach Anspruch 8, **dadurch gekennzeichnet, dass** das Ringlager (50, 52) ein Ölfilm-Axiallager ist, das die Länge des Stützteils hat.

## Revendications

1. Procédé pour fixer un agencement séparé de roue de transport, selon la revendication 3, à un conteneur (100) comprenant une pièce d'angle présentant une fente (102) et une plaque de paroi (104) entourant la fente (102), procédé dans lequel l'agencement de roue de transport est fixé sur le côté du conteneur qui se trouve contre le sol, de sorte que l'agencement de roue de transport est situé essentiellement à l'intérieur de la zone délimitée par les bords du côté, lequel se trouve contre le sol, et l'agencement de roue de transport est fixé au conteneur afin de tourner autour d'un axe de rotation, de sorte que l'agencement de roue peut tourner dans une direction de transport souhaitée, dans lequel l'agencement de roue de transport est fixé à une fente (102) dans l'angle du conteneur, laquelle fente est formée pour l'élément de verrouillage (30) qui comporte une tige de verrouillage (34), laquelle peut tourner autour d'un axe longitudinal et dans une extrémité de la tige de verrouillage se trouve une pièce d'extrémité (36), laquelle est ajustée dans la fente (102) dans l'angle du conteneur, **caractérisé en ce que** l'élément de verrouillage (30) peut, de plus, se déplacer dans la direction de l'axe longitudinal, de telle sorte que la plaque de paroi (104) du conteneur est serrée entre la pièce d'extrémité (36) de la tige de verrouillage (34) et le châssis (10).

2. Procédé selon la revendication 1, **caractérisé en ce qu'**un agencement de roue de transport est fixé dans chaque coin du côté qui se trouve contre le sol.

3. Agencement de roue de transport d'un conteneur comportant une pièce d'angle présentant une fente (102) et une plaque de paroi (104) entourant la fente (102), lequel agencement de roue comporte un châssis (10), au moins une roue (20a) et des moyens de fixation permettant une fixation au conteneur (100), les moyens de fixation étant agencés pour tourner autour d'un axe de rotation, lesquels dits moyens de fixation comportent un élément de verrouillage (30) pour être fixé au côté du conteneur qui se trouve contre le sol, dans lequel l'élément de verrouillage (30) présente une tige de verrouillage (34) qui peut tourner autour d'un axe longitudinal et dans une extrémité de la tige de verrouillage, il existe une pièce d'extrémité (36) qui peut être ajustée dans une fente (102) située dans l'angle du conteneur, **caractérisé en ce que** l'élément de verrouillage (30) peut, de plus, se déplacer dans la direction de l'axe longitudinal de telle façon que la plaque de paroi (104) du conteneur soit serrée entre la pièce d'extrémité (36) de la tige de verrouillage (34) et le châssis (10).

4. Agencement de roue de transport selon la revendication 3, **caractérisé en ce qu'**il comprend, de plus, une partie de support (32), laquelle présente un trou de passage destiné à la tige de verrouillage (34) et une partie inférieure (12) et un espace creux formé dans le châssis (10), espace creux dans lequel la partie de support est placée pour tourner en liaison avec le châssis.

5. Agencement de roue de transport selon la revendication 4, **caractérisé en ce qu'**il existe un palier de poussée (42) autour de la tige de verrouillage (34), entre la partie de support (32) et la partie inférieure (12).

6. Agencement de roue de transport selon la revendication 4 ou 5, **caractérisé en ce qu'**il existe un palier de poussée (46) autour de la tige de verrouillage (34), entre la partie de support (32) et la pièce d'extrémité (36).

7. Agencement de roue de transport selon l'une quelconque des revendications 3 à 6, **caractérisé en ce qu'**il comporte deux roues (20a, 20b), lesquelles sont placées sur les côtés opposés du châssis (10).

8. Agencement de roue de transport selon l'une quelconque des revendications 4 à 6, **caractérisé en ce qu'**il comporte une roue (20a), laquelle est placée d'une façon excentrée par rapport au châssis (10) et **en ce qu'**il existe au moins un palier annulaire (50, 52) autour de la partie de support (32), entre la surface intérieure du châssis et la surface extérieure de la partie de support.

9. Agencement de roue de transport selon la revendication 8, **caractérisé en ce que** ledit palier annulaire (50, 52) est un palier de poussée à film d'huile, lequel présente la longueur de la partie de support.
